# EUROPÄISCHE PATENTSCHRIFT

(11) **EP 3 032 964 B1**
(45) Veröffentlichungstag und Bekanntmachung des Hinweises auf die Patenterteilung: **29.03.2017**
(21) Anmeldenummer: 14757832.2
(22) Anmeldetag: 23.07.2014
(51) Int. Cl.: A23L 21/12, A23L 33/20, A23L 29/231

(54) **FRUCHTAUFSTRICH MIT NIEDRIGEM ZUCKERGEHALT**
FRUIT SPREAD HAVING LOW SUGAR CONTENT
PÂTE À TARTINER AUX FRUITS À FAIBLE TENEUR EN SUCRE

(30) Priorität: 26.07.2013 AT 504732013
(43) Veröffentlichungstag der Anmeldung: 22.06.2016
(73) Patentinhaber: Stadler, Silvia, 4722 Peuerbach (AT)
(72) Erfinder: Stadler, Silvia, 4722 Peuerbach (AT)
(74) Vertreter: Patentanwaltskanzlei Hübscher
(86) Internationale Anmeldenummer: PCT/AT2014/050162
(87) Internationale Veröffentlichungsnummer: WO 2015/010149

(56) Entgegenhaltungen:
- EP-A2- 0 042 710
- EP-A2- 0 369 093
- DE-C- 373 418
- MD-Y- 114
- Hebstreith&Fox: "Pectin Amid AF 005-N for calorie-Reduced preverves and Fruit Spreads", Internet , 15. Juli 2013 (2013-07-15), Seiten 1-4, XP002730098, Gefunden im Internet: URL:http://www.herbstreith-fox.de/fileadmi n/tmpl/pdf/awtinfo/AWT_Pektin_Amid_AF_005N _en.pdf [gefunden am 2014-09-23]
- Herbstreith&Fox: "Niederveresterte, amidierte Pektine", Internet , 18. Januar 2007 (2007-01-18), Seiten 1-13, XP002730097, Gefunden im Internet: URL:http://www.herbstreith-fox.de/fileadmi n/tmpl/pdf/awtinfo/AWT_NV_Amidierte_Pektin e.pdf [gefunden am 2014-09-23]
- DATABASE GNPD [Online] MINTEL; Juni 2013 (2013-06), Anonymous: "Strawberry Confiture", XP002730099, gefunden im www.gnpd.com Database accession no. 2090591
- Anonymous: "Wie viel Zucker steckt in der Marmelade/Fruchtaufstrich?", Internet , Seiten 1-2, XP002730119, Gefunden im Internet: URL:http://www.bauernhof-marmelade.de/Info s-zum-Zuckergehalt-_-13.html [gefunden am 2014-09-23]

## Beschreibung

Die Erfindung bezieht sich auf einen Fruchtaufstrich mit zerkleinerten Früchten wenigstens einer Sorte, Zucker und Pektin in einer Konzentration von 1 bis 1,5% des Fruchtgewichtes.

Zur Herstellung von Marmeladen ist es bekannt (DE 373418 C), zerkleinerte Früchte und Pektin im Bereich von 0,4 bis 0,8 Gewichtsprozent bei 60 Gewichtsprozent Zucker einzusetzen, wobei der in den Früchten enthaltene Zucker- und Pektinanteil berücksichtigt werden muss. Die gebildete Masse wird zur Sterilisierung kurze Zeit bis zur Siedetemperatur erhitzt. Nachteilig ist allerdings, dass der hohe Zuckeranteil von 60 Gewichtsprozent den Eigengeschmack der verwendeten Früchte teilweise überdeckt und zudem einen hohen Brennwert der Marmelade mit sich bringt. Darüber hinaus sind Marmeladen mit derart hohem Zuckeranteil für Verbraucher mit Diabetes mellitus ungeeignet.

Darüber hinaus sind Rezepturen für Fruchtaufstriche mit geringerem Zuckeranteil von ungefähr einem Drittel bekannt (MD 114 Y), bei denen zur Regulierung des ph-Wertes Zitronensäure oder Ascorbinsäure zugesetzt wird.

Schließlich werden beispielsweise in der EP 0369093 A2 Herstellungsverfahren für Fruchtaufstriche geoffenbart, bei denen zur Einstellung des ph-Wertes Zitronensäure nach Zugabe des Zuckers und des Pektins zugesetzt wird. EP0042710 offenbart kalorienreduzierte Fruchtaufstriche, die 10-50 Gew% Fruchtanteil und einen Feststoffgehalt von 30-55 Gew% aufweisen und die bevorzugt durch niederverestertes amidiertes Pektin und ein weiteres Verdickungmittel verdickt werden.

Der Erfindung liegt somit die Aufgabe zugrunde, einen Fruchtaufstrich der eingangs geschilderten Art so auszugestalten, dass der Zuckeranteil deutlich reduziert werden kann, ohne Nachteile hinsichtlich der Konsistenz der Aufstrichmasse in Kauf nehmen zu müssen.

Die Erfindung löst die gestellte Aufgabe dadurch, dass der Zuckeranteil weniger als ein Fünftel des Fruchtgewichtes beträgt, dass das Pektin ein niederverestertes, amidiertes Pektin ist und dass zur Einstellung des pH-Wertes des Fruchtaufstriches zwischen 2 und 6 Limettensaft zugesetzt ist.

Durch die besonderen Geliereigenschaften eines niederveresterten Pektins wird die Voraussetzung geschaffen, den Zuckeranteil unter ein Drittel des Fruchtgewichts bei gleichbleibendem Gelierverhalten zu verringern, womit sich der relative Fruchtanteil erhöht und das Fruchtaroma des Aufstrichs hervorgehoben wird. Mit der Verringerung des Zuckeranteils sinkt auch der Brennwert des Aufstrichs. Besonders vorteilhafte Verhältnisse ergeben sich in diesem Zusammenhang, wenn der Gewichtsanteil des Zuckers auf ein Fünftel des Fruchtgewichtes abgesenkt wird. Außerdem erlauben niederveresterte Pektine höhere pH-Werte für den Geliervorgang, was sich in Verbindung mit dem geringeren Zuckeranteil vorteilhaft auf die Geschmacksnote des Fruchtaufstriches auswirkt. Der pH-Wert kann somit durch Zugabe von Limettensaft auf einen Wert zwischen 2 und 6, vorzugsweise auf einen Wert von 3, eingestellt werden. Der Zusatz von Limettensaft bringt nicht nur geschmackliche Vorzüge mit sich, sondern unterstützt auch die Gelierung aufgrund seines Calciumanteils, weil niederveresterte Pektine die Gelierung bei Anwesenheit von Calciumionen auch bei einem geringeren Trockensubstanzgehalt und einem höheren pH-Wert ermöglichen. Die Praxis hat gezeigt, dass eine Zugabe von 1 bis 3 % Limettensaft im Verhältnis zum Fruchtgewicht in Abhängigkeit von den jeweiligen Fruchtsorten den üblichen Anforderungen vorteilhaft genügt.

Besonders vorteilhafte Gelierverhältnisse ergeben sich, wenn das niederveresterte Pektin amidiert ist, weil in diesem Fall der zur Gelierung benötigte Anteil an Calciumionen gesenkt werden kann.

Zur Herstellung des Fruchtaufstriches werden die Früchte in Stücke zerkleinert und gemeinsam mit einem ersten Teil des Zuckers und dem Limettensaft unter Rühren gekocht, wonach die Temperatur auf 80 bis 85 °C, vorzugsweise auf 85 °C abgesenkt und der mit Pektin vermengte restliche Teil des Zuckers beigegeben wird. Durch den geringen Trockensubstanzgehalt der Masse aus Fruchtstücken, Zucker und Limettensaft kann das Pektin nach dem Kochen bzw. Sterilisieren mit vollständiger Löslichkeit direkt in die Masse eingebracht werden, ohne vorher in Wasser gelöst werden zu müssen. Um ein gleichmäßiges dispergieren des Pektins als Voraussetzung für eine vollständige Löslichkeit zu ermöglichen, wird zu den Fruchtstücken nur ein Teil des Gesamtzuckeranteils beigemengt, und das Pektin vor dem Einbringen mit dem restlichen Teil des Zuckers vorgemischt.

Besonders vorteilhafte Herstellungsbedingungen ergeben sich in diesem Zusammenhang, wenn der erste Teil des Zuckers vier Fünftel des Gesamtzuckeranteils beträgt und das Pektin mit dem verbleibenden Fünftel vor dem Einbringen vorgemischt wird.

### Beispiel 1

In einem ersten, nicht erfindungsgemäßen Ausführungsbeispiel werden zwei Drittel einer ersten Fruchtsorte, beispielsweise Kirschen und ein Drittel einer zweiten Fruchtsorte, beispielsweise Cranberries zerkleinert und mit Kristallzucker von vier Fünfzehntel des Gesamtfruchtgewichtes vermengt. Dieser Masse wird ein Limettensaft oder Limettensaftkonzentrat beigemischt, bis ein pH-Wert von 3 erreicht wird. In Abhängigkeit der verwendeten Fruchtsorten sind hierfür ungefähr 1 bis 3% Limettensaft vom Gesamtgewicht des herzustellenden Fruchtaufstriches erforderlich.

Die auf diese Weise gebildete Masse aus Fruchtstücken, Zucker und Limettensaft wird erhitzt und 5 Minuten bei 95 bis 100 °C unter ständigem Rühren gekocht und sterilisiert. Währenddessen wird Kristallzucker von einem Fünfzehntel des Gesamtfruchtgewichtes mit 1,5 % niederverestertem, amidiertem Pektin im Verhältnis zum Gesamtfruchtgewicht im Trockenzustand vorgemischt, um ein vorteilhaftes Dispergierverhalten des Pektins in der Fruchtmasse zu ermöglichen. Danach wird die Fruchtmasse auf 85 °C abgekühlt und das Gemisch aus Zucker und Pektin unter Rühren eingebracht. Nach ca. 3 Minuten ist das Pektin vollständig gelöst, sodass die Fruchtmasse abgefüllt werden kann und beim weiteren Abkühlen geliert.

### Beispiel 2 (nicht erfindungsgemäss)

Im Unterschied zum Ausführungsbeispiel 1 wird die Hälfte des gesamten Fruchtanteils durch eine Fruchtsorte, beispielsweise Marillen gebildet, während die andere Hälfte zu gleichen Teilen aus zwei anderen Fruchtsorten, wie beispielsweise Ribiseln und Himbeeren oder Heidelbeeren zusammengesetzt ist. Der Zuckeranteil am Fruchtgewicht wird mit 20 % gewählt, wobei zunächst 4/5 des Zuckeranteils der zerkleinerten Fruchtmasse zusammen mit Limettensaft beigemengt werden, um einen pH-Wert von 3 für den gesamten Fruchtaufstrich sicherzustellen. Das restliche Fünftel des Zuckeranteils wird zunächst mit 1,5 Gew.% Pektin gemischt und dann der gemäß Beispiel 1 nach dem Kochen auf 85 °C abgekühlten Fruchtmasse hinzugefügt, um nach ca. 3 Minuten die Fruchtmasse abfüllen zu können. Es ergibt sich ein Fruchtanteil von etwa 80 Gew.% an der Fruchtmasse.

## Patentansprüche

1. Fruchtaufstrich mit zerkleinerten Früchten wenigstens einer Sorte, Zucker und Pektin in einer Konzentration von 1 bis 1,5% des Fruchtgewichtes, **dadurch gekennzeichnet, dass** der Zuckeranteil weniger als ein Fünftel des Fruchtgewichtes beträgt, dass das Pektin ein niederverestertes, amidiertes Pektin ist und dass zur Einstellung des pH-Wertes des Fruchtaufstriches zwischen 2 und 6 % Limettensaft zugesetzt ist.

2. Verfahren zur Herstellung eines Fruchtaufstriches nach Anspruch 1, **dadurch gekennzeichnet, dass** die Früchte in Stücke zerkleinert und gemeinsam mit einem ersten Teil des Zuckers und dem Limettensaft unter Rühren gekocht werden, wonach die Temperatur auf 80 bis 85°C abgesenkt und der mit Pektin vermengte restliche Teil des Zuckers beigegeben wird.

3. Verfahren nach Anspruch 2, **dadurch gekennzeichnet, dass** der erste Teil des Zuckers 4/5 des Gesamtzuckeranteils beträgt.

## Claims

1. Fruit spread comprising chopped fruits of at least one type, sugar and pectin in a concentration of 1 to 1.5% of the fruit weight, **characterised in that** the sugar proportion amounts to less than one fifth of the fruit weight, the pectin is a low-esterified, amidiated pectin and between 2 and 6% lime juice is added to adjust the pH value of the fruit spread.

2. Method of producing a fruit spread as claimed in claim 1, **characterised in that** the fruits are chopped into pieces and boiled together with a first part of the sugar and the lime juice with stirring, after which the temperature is decreased to 80 to 85°C and the remaining part of the sugar which is mixed with pectin is added.

3. Method as claimed in claim 2, **characterised in that** the first part of the sugar amounts to 4/5 of the total sugar proportion.

## Revendications

1. Pâte à tartiner aux fruits avec des fruits broyés d'au moins une sorte, du sucre et de la pectine dans une concentration de 1 à 1,5 % du poids des fruits, **caractérisée en ce que** la proportion de sucre est inférieure à un cinquième du poids des fruits, **en ce que** la pectine est une pectine amidée de basse estérification et **en ce que** du jus de limette est ajouté pour ajuster le pH de la pâte à tartiner aux fruits entre 2 et 6 %.

2. Procédé pour la fabrication d'une pâte à tartiner aux fruits selon la revendication 1, **caractérisé en ce que** les fruits sont broyés en morceaux et sont cuits en remuant, conjointement à une première part de sucre et au jus de limette, à la suite de quoi la température est abaissée à 80°C jusqu'à 85°C et la partie restante du sucre mélangée avec la pectine est ajoutée.

3. Procédé selon la revendication 2, **caractérisé en ce que** la première partie du sucre est de 4/5 de la part totale de sucre.
